Europäisches Patentamt

European Patent Office

Office européen des brevets

(11) Publication number: **0 087 871**
**B1**

(12) **EUROPEAN PATENT SPECIFICATION**

(45) Date of publication of patent specification: **02.09.87**

(21) Application number: **83300665.3**

(22) Date of filing: **10.02.83**

(51) Int. Cl.⁴: **G 06 F 3/023, B 41 J 5/00, B 41 J 3/00**

(54) Interactive Chinese typewriter.

(30) Priority: **25.02.82 US 352245**
**26.01.83 US 460621**

(43) Date of publication of application:
**07.09.83 Bulletin 83/36**

(45) Publication of the grant of the patent:
**02.09.87 Bulletin 87/36**

(84) Designated Contracting States:
**DE NL**

(56) References cited:
**GB-A-2 062 916**
**US-A-4 294 550**

(73) Proprietor: **Bock, James E.**
**6705 Edloe**
**Houston Texas 77005 (US)**

(72) Inventor: **Bock, James E.**
**6705 Edloe**
**Houston Texas 77005 (US)**

(74) Representative: **Hustwitt, Philip Edward et al**
**Hustwitt & Co. St. George's House**
**44 Hatton Garden**
**London, EC1N 8ER (GB)**

Courier Press, Leamington Spa, England.

## Description

The present invention relates to language information processing and communication. More particularly, the present invention relates to non-English alphabet languages (e.g., Chinese, Korean and Japanese) information processing, such as typewriting.

Chinese, as a written form of communication, presents a major burden to efficient and rapid communications. Current communications technology relative to the written Chinese language is confounded both at the point where the person meets the machine and at the point where the machine presents its output. Chinese writings in the current square Han characters (ideographs used to represent words and ideas) have followed a pattern of development that has led to the development of over 50,000 Chinese characters.

A traditional Chinese character is hand written with brush and ink as a combination of various calligraphy strokes to create the character. An educated person in China is still measured by the number of characters he has mastered. Calligraphy is still widely popular and intensely followed as an art form in China. But to become basically literate and to read and write the characters, let alone master the language, is a long and laborious process. To be "newspaper literate" one must know at least 2,000 characters; to be college educated, 5,000. For a variety of business uses, between 8,000 and 10,000 characters are required, which is about the number of characters in a good dictionary. One such dictionary is the Pinyin Chinese-English Dictionary, published by the Commercial Press Limited of Hong Kong, 1979 (Library of Congress Cataloging in Progress Number: 79—2477). Because of this very large number of characters, Chinese typewriting, typesetting and the like, are rendered extremely complicated, expensive and time-consuming. With the advent of computer technology, a special problem is presented — how do you take a language with 50,000 characters and make it compatible with a conventional computer keyboard having a limited number of keys.

As a result of the need to provide a high-speed way to handle written communications in the Chinese language, there has been an ongoing activity in the prior art in developing various keyboard arrangements and coding schemes that provide for use of computer-based information processing of ideographic languages. Each of these prior-art data processing systems have attempted to provide approaches that will accomplish the unique identification of an individual Chinese character with a minimum of keyboard entries, and where the keyboard entry is simple enough to enable an operator or typist to create the ideograph text at high speeds.

The prior-art techniques may be classified into various methods of encoding the unique identification of a Chinese character to be printed. One such method was to develop a "Standard Telegraphic Code" for the character. This code was developed to transmit characters by means of a four digit number or three letter code. This respectively produced 10,000 or 17,576 characters. The Chinese telegraph code facilitated long-distance communications, but looking up the code number of each character was a tedious and inefficient process.

U.S. Specification No. 4,294,550 states that attempts to simplify the selection of the characters to be printed, by assigning numerical codes to them, have in general been based either upon traditional schemes of analysing and classifying Chinese characters, such as are used in Chinese dictionaries, or upon the arbitrary assignment of numerical codes to the characters as in the Chinese telegraph code discussed above.

Another method practiced in the prior art is the stroke sequence recognition method demonstrated by the Graphic Art Research Foundation, Inc. (GARF) Chinese typewriter in which a keyboard of 21 keys is used to encode 21 basic individual calligraphy strokes used to draw Chinese characters. The GARF typewriter does not "construct" the ideograph stroke-by-stroke, as is the case in the formation of words, letter-by-letter, on an English language typewriter. Rather, the keys on the GARF typewriter generate an electronic code for each stroke or entry, which, when combined in a particular sequence, gives the electronic address code for the complete ideograph character. The ideographs are stored separately in the machine and are accessed by their particular electronic address code.

Another approach by the prior art has been to use extremely large keyboard entries for identifying the Chinese character, for example, the IBM 5255/34. A keyboard having more than 2,000 characters uniquely identified on individual keys is provided. Each key in the keyboard has 12 characters on it, and at the side there is an additional 12 digit keyboard. If the operator presses key number 12, for example, then selects a key on the large keyboard, the 12th character on that key is displayed. Another example of the large keyboard entry is the CCRT model 280.

More sophisticated approaches to encoding information into a computer for uniquely identifying a Chinese character have also been attempted by the prior art. These encoding methods are generally described as corner coding methods, such as the single corner (Global Integration Technology (GIT) unit), three corner (Wang Ideographic Word Processor (IWP)) or four corner approaches (the Cornell University approach). The corners here referred to are the corners of the square Han characters which comprise each ideograph. An example of a three corner coding system is given in U.S. Specification No. 4,294,550 of Wang mentioned above, while U.K. Specification No. 2,062,916A discloses a four corner coding system.

Corner encoding refers to a method of assigning numeric or alphabetic codes to a set of shapes that occur at the corners of characters. For each of these corner coding process machines, the coding process begins with the analysis of a character's fundamental symbols through the principal of corner coding and the principal of shape coding. In the three corner coding method, only three corners of a character are used in the conversion of the ideograph to its equivalent code. Symbols in the three corners are matched with fundamental symbols, yielding a code number consisting of three sets of two digits.

For each of these corner coding methods, the lack of speed has been a major drawback of Chinese data entry. Another disadvantage to the corner coding method is the inability to uniquely identify each of the characters in the set of encoded and stored characters. To uniquely identify a given character, a two-step process must sometimes be used to isolate the desired character. The first step involves looking up all the characters described by a particular code. In an electronic word process, all the characters meeting a particular shape description are displayed on the CRT. The operator then implements the second step which consists of picking the desired character out of the displayed list for insertion in text.

In each of the above-described prior-art approaches to data processing of Chinese characters, the problem of uniquely identifying each individual character with a minimum of keyboard entry to achieve high speed character identification has not been possible.

The present invention solved the problems of the prior art to achieve the unique identification of Chinese characters through a minimum of keyboard entries to obtain a high speed Chinese language typewriter through a different and more efficient encoding approach. In one embodiment of the invention, the methodology of the present invention is derived from a standard Chinese-English dictionary, such as the one identified above.

In accordance with the present invention there is provided in a microprocessor controlled typewriting system for printing ideogram characters formed from a radical and a number of additional calligraphy strokes, said system including,

(A) a keyboard entry,

(B) a microprocessor,

(C) a CRT for displaying an identified ideogram character, and

(D) a printer for printing the identified characters,

a method of identifying from among a plurality of encoded characters a character to be printed, by generating, in response to the operation of one or more keys on the keyboard entry,

(a) a code word representative of the radical number of the character to be printed;

(b) a code word representative of the number of additional calligraphy strokes in the character to be printed; and

(c) a code word representative of the character to be printed according to the character's position in a table of all the encoded characters having the same radical and stroke number code words by

i) causing the microprocessor to display in CRT display an array of all the characters encoded for the characters having the radical and stroke code words generated for the character to be printed by operation of the keyboard; and

ii) selecting from among the displayed characters the character to be printed by pressing a corresponding key in an array of keys of said keyboard, the array of keys equal to the array of displayed characters, said microprocessor generating the character code word for the identified character in response to the struck key;

the microprocessor providing the character to be printed to the printer from among the plurality of encoded characters according to the radical, stroke and character code words generated in steps (a), (b) and (c).

In another aspect of the invention, there is provided an interactive microprocessor controlled typewriting system for printing ideogram characters formed from a radical and a number of additional calligraphy strokes, which comprises:

(a) a microprocessor programmed to select in response to input from an operator a character to be printed from among a plurality of stored characters,

(b) a mass storage device response to said microprocessor for storing encoded ideogram characters, each stored character identified according to its radical, the number of calligraphy strokes required in addition to the radical to construct the character and a character number corresponding to the position of the character in a table of all of the characters having the same radical and number of additional strokes;

(c) a keyboard entry means responsive to an operator, said keyboard entry means having a plurality of keys for generating code words to said microprocessor for the radical, stroke and character number of a character to be printed, ones of said keys identifying certain radicals and certain ones of said keys identifying characters which most frequently occur in ideographic text, said microprocessor automatically generating the correct code words for said radicals or characters when their respective keys in said keyboard means are struck;

(d) a display means responsive to the microprocessor for displaying to the operator the characters identified for printing; and

(e) a printer responsive to the microprocessor for printing the characters displayed by said display means;

wherein said microprocessor is responsive to an operator request to display in said display means an array of characters all having the radical and stroke code words generated for the character to be printed and having predetermined character positions, said keyboard entry means having a corresponding array of keys in which each character position in said displayed character array has a corresponding key in the array of keys whereby the striking of a key in the array of keys selects as the character to be printed the character displayed in the character position corresponding to the struck key.

Brief Description of the Drawings

For a fuller understanding of the invention, reference can be made to the following description taken in connection with the accompanying drawings in which:—

Figure 1 is a block diagram illustration of the interactive typewriting system of the present invention;

Figure 2 is an illustration of a typical computer keyboard entry modified in accordance with the present invention for encoding the identifying codes for the Chinese characters to be printed;

Figures 3(a) and (b) together form a computer flow diagram of a portion of the programming of the present invention for selecting the next character to be printed; and

Figures 4(a) and (b) are a computer flow diagram for the RETRIEVE CHAR subroutine as illustrated in the flow diagram of Figures 3(a) and (b).

Similar reference numerals refer to similar parts throughout the drawings.

Brief Description of the Preferred Embodiment of the Invention

The present invention is basically derived from the presentation of Chinese characters as they appear in standard Chinese-English dictionaries, for example, the Pinyin Chinese-English Dictionary outlined above. Each Chinese character is constructed from one of over 200 basic drawings identified as "radicals". Radicals are the roots of Chinese characters. To analyze the meaning of a character, one must break the character down to its roots, into radicals. From the radical, a character can be found in the dictionary. A given radical may have many Chinese characters constructed therefrom by the addition of calligraphy strokes.

The Chinese-English dictionary has cataloged by radicals all of the characters which have as their root a given radical. Grouped into various tables for each of the radicals are the Chinese characters which all have the same number of additional calligraphy strokes. Thus, a given Chinese character may be found according to the radical of the character and the number of additional calligraphy strokes needed to complete the character.

To complete the unique identification of a given character, the dictionary has listed in a table all of the characters having the same number of additional calligraphy strokes and the same radical for each of the groups associated with a given radical. Thus, the present invention has produced a methodology of uniquely identifying a given Chinese character by assigning a code to each radical, a stroke number code equal to the number of additional calligraphy strokes required to draw the character from its radical and a character number code which corresponds to the position of the character in a table of all of the characters having the same number of additional calligraphy strokes and the same radical. In the present invention, three code numbers are required to uniquely identify a given Chinese character. These three code numbers will have a total of seven digits. But the programmed computer 18 shortens input for these numbers by condensing input operations. The condensing of input is accomplished by assigning the high frequency used radicals to keys which, when depressed, gives the 3 digit number for that radical with one key stroke. Additionally, the space bar generates zero digits to (as frequently happens) fill code numbers with zeros quickly and easily.

In an alternate embodiment of the invention, the process of uniquely identifying a Chinese character proceeds as described above with respect to inputting a code to identify the radical and a code to identify the number of additional calligraphy strokes (the R/S index for the character). A different approach is taken, however, in the alternate approach with respect to the last code required to completely identify the character. In the first embodiment, the characters having the radical and number of additional calligraphy strokes (R/S) were arranged in a list as they appear in a Chinese-English dictionary. In the alternate embodiment, the characters under a given radical and number of calligraphy strokes are likewise arranged in a list, but the position of each character in the list is based on its frequency of use, i.e., the more frequently used characters are listed first, with the first character in the list the most frequently used of those characters.

In this alternate embodiment, a third code to the processor 18 is also required to uniquely identify the character. This third code can be any special stroke, such as the "Right Arrow" key. If the "Right Arrow" key is struck as the third code input in a character identification routine, the computer 18 causes to appear in the text of characters 26 for the next character to be identified, the first character in the list for the characters specified by the just inputted R/S codes. As mentioned previously, this character is the most frequently used of those characters. If the character displayed is not the one desired, the next most frequently used character is brought up simply by depressing the "Right Arrow" key again. This process may continue until the desired character appears in the text on the screen. Once the desired character is being displayed, the selection process for the character is then terminated by tapping the "Space Bar". Depressing of the "Space Bar" clears the R/S/C codes and moves the cursor in the displayed text 26 to the next adjacent position for the next character input.

During the selection process for this alternate embodiment, if the operator wishes to see the most frequently used character for the R/S characters, he may enter the code "01" following the R and S codes. The code "02" after the R/S codes bring up for display the second most frequently used of the R/S characters, and so forth for "03", etc.

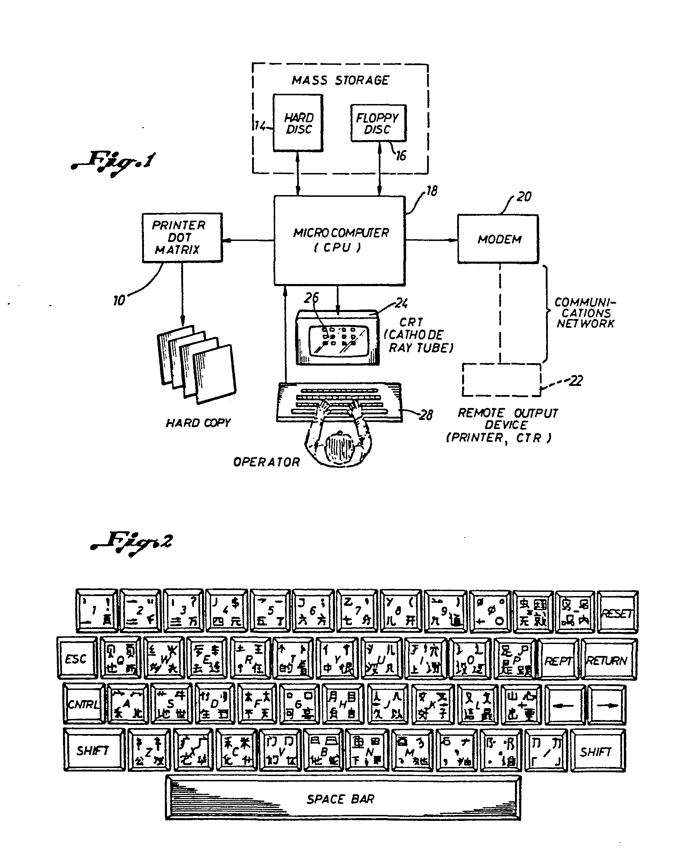

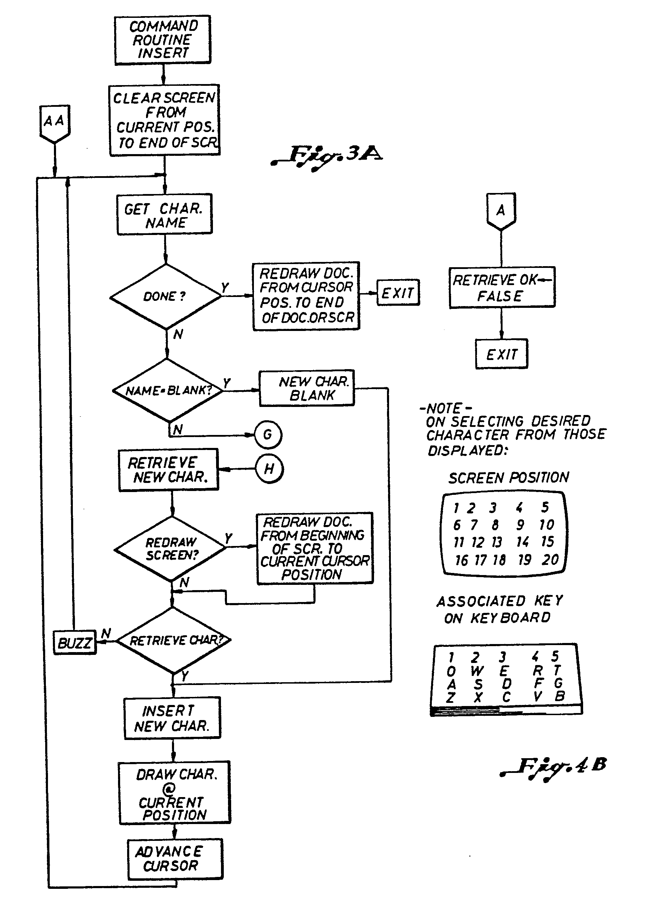

Turning now to the figures and first to Figure 1, a block diagram of the interactive Chinese typewriting system 1 of the present invention is shown. Central to the operation of the data processing system is microcomputer unit 18 which responds to input data from the keyboard 28. Microcomputer 18 is programmed to retrieve from mass storage unit 12 the encoded ideographs according to the radical, stroke number and character number code words generated by the operator via the standard computer keyboard 28. Figure 2 illustrates a typical computer keyboard 28 modified according to the present invention.

Still referring to Figure 1, mass storage unit 12 is shown comprised, for example, of a hard disk 14 and a floppy disk 16. While hard and floppy disks are shown for storing the encoded Chinese character, other equivalent mass storage devices could be used, such as solid-state RAMs. Each encoded Chinese character is identified according to its radical, stroke number and character number as previously described. Once identified, the digital information for generating the character, for example, as a dot matrix array, is retrieved from mass storage 12.

A cathode ray tube CRT 24 is provided for displaying the characters to be printed as they are retrieved from mass storage in response to the proper code words inputted by the operator. The CRT display 24 responds to the programming of the microcomputer 18 to display the identified characters to be printed in an array on the screen of characters 26 which, for the present invention, comprises a 10 × 7 character array. When the text to be printed has been composed and is displayed in CRT 24, the operator may cause the text to be outputted into hard copy such as by printing the displayed array on dot matrix printer 10 or transmitted via a modem 20 to a remote output device 22, such as another printer, CRT, etc. In this manner, the present invention generates the desired printed text of Chinese characters. For the present invention, mass storage unit 12 stores each encoded character in the form of digital information for a 20 by 20 (a 40 × 40 matrix is also possible) dot matrix.

For the presently preferred embodiment of the invention, keyboard means 28, CRT display 24 and microcomputer 18 comprise an Apple II Plus microprocessor system from Apple Computers. Mass storage device 12 is a Corvus Systems, Inc. 20 M byte (8-bits per byte) disk storage unit, and printer 10 is an Epson MX 80.

Referring now to Figures 1 and 2, microcomputer 18 responds to keyboard 24 as if it were a number of different keyboards, each with a normal (default) and shift level. In Figure 2, each of the keys contain four character symbols imprinted thereon. The upper left corner of each key represents the default or normal mode of the keyboard 28. The upper right hand corner of each key is the shift position; the lower left representing the first escape-default level and the lower right representing the first escape-shift position. In the normal or default keyboard, only a single key actuation is required, while the shift level must be pushed along with another key. The keyboard levels (default = "0") are chosen by pushing the escape button while in a program edit mode. The input line signals the keyboard level in control; 0 = default, 1—7 (or more) are additionally available keyboards with both default and shift keys. Only levels 0 (default) and 1 (first escape) are described herein, however, the device is not limited to only these keyboards.

In operation, the present invention uniquely identifies an encoded Chinese character in response to the operator's actuation of the various keys of the keyboard 28. Each encoded character is identified by three discrete numbers corresponding to the radical, stroke number and character number for the Chinese character. For example, the sequence of numbers 174 2 2 (radical/stroke/character) represents the three discrete code numbers to identify the Chinese character. The first number 174 is the radical number. A radical is the root of a character or the primary identifier, and is a distinctive ideograph that is used as a basic part with which to build more complex characters. The radicals are an ancient and fundamental part of the Chinese written language and are frequently numbered to facilitate dictionary use. For example, radical 174 appears in the Pinyin Chinese-English dictionary as the radical 靑. The second code number 2 is the number of calligraphy strokes in addition to the radical that appears in the character's original brush and calligraphy drawing. This is also a time honored method of distinguishing between characters. The third number 2 is the individual character's position on the list of characters defined by the first two numbers. Any character to be printed that is encoded into the system may be retrieved from mass storage 12 by typing in these three codes using the top row of numbered keys on the keyboard.

While each character encoded into the system may be identified by inputting three code words to uniquely identify the character, the present invention includes features to simplify the keyboarding process and to speed up the input. An analysis had been made of the total number of Chinese characters contained in one of the more representative dictionaries, such as the Pinyin Chinese-English dictionary. Those radicals with the highest number of characters grouped under them, and the most frequently used characters in Chinese text have been selected and placed on individual keys on the keyboard 28. The keys for inputting radicals make up the normal and shift keyboards, and are the upper two corners of the keys (see Figure 2).

Those radicals for the most commonly used characters have also been placed in the most convenient keyboard positions for ease of operator access. Pressing one of the radical keys will enter the complete radical code word into the microcomputer 18 with the microcomputer 18 ready to receive the stroke and character number to complete the identification process of the desired character to be printed. Striking a radical key twice will put the first character in that radical's list, which quite often is that radical in character form. The most commonly occuring individual characters have been placed in the lower left and lower right hand corners of the keys. Striking an individual key for a particular character causes the microcomputer 18 to generate all three code words to uniquely identify that character.

The following is an example of how the present invention inputs the code words to uniquely identify a desired character to be printed. If the radical for the desired character appears on the keyboard, such as for example the character 壹下, and the radical 壴 is represented by an "*", a space by the letter "s", then the number previously used to present the character 壹下 (174 2 2) would result in keystrokes: *2s2s. Since the "s" uses the space bar, the affect is the same as the space in the English keyboard and wouldn't be counted in the keystrokes per word. This example required only three decisional keystrokes, the space bar strikes representing non-decisional strokes. This results in easy and rapid keyboard entry. This occurs because in the character input mode of the program, the space bar entry fills the remaining code words in the character number with zeros as needed, one at a time. When all seven digits for the three code numbers are input, the program immediately searches for the character and inputs it to the edit screen.

The most complicated character designation could be, for example, a three digit radical, a two digit stroke and a two digit character number, i.e., 111 11 11. However, the radicals likely to have high numbers of strokes and characters under them have been selected out of the basic list for easier access. Since about 55% of the radical list have so few characters that the stroke number is not used, that is, the stroke number is equal to zero and there is only one list of characters under the radical, identification of the character will only require the radical and the character number which will also speed entry for those particular characters. For example, the entry 135s2s identifies the second character 某 under the radical 甘. Note that after the radical number, only one space bar entry is necessary to input two zeros to fill the stroke position.

For the preferred embodiment of the present invention, two sets of Chinese character are available in the mass storage device 12. A character is created by a small field or matrix of dots which is stored in electronic memory and reproduced as tiny dots on the CRT screen to later be printed. The primary set is a matrix of 20 × 20 dots which appear on the CRT screen as a field of 20 × 20 pixels. Chinese characters outputed to a printer, such as a business letter, uses the same 20 × 20 matrix information to create the characters.

A typical dot matrix pin printer can be used to produce the Chinese characters. A second set of characters are also stored in the mass storage device 12 in a 40 × 40 dot matrix format. At this size, 20 characters can be displayed in a 4 × 5 array on the CRT display means with good clarity and detail. Characters this size will be displayed when the operator types a radical, stroke and characters number sequence ending in zero. This allows an operator to find a character when only the radical number and stroke count are known. Up to 20 characters will be displayed for selection for the designated radical-stroke code. If there were more than 20 characters available, which is not the usual case but which will happen occasionally, then the twentieth position will signal that more characters are available. By pushing the key shown in position 20 the additional characters will be displayed.

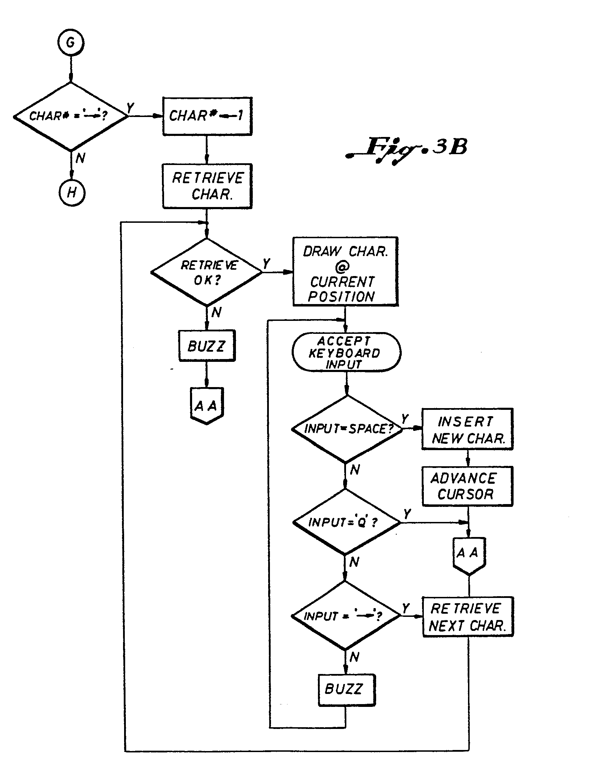

For normal business uses there will never be a situation when more than one additional screen will be needed to locate a character under a particular radical-stroke designation. Corresponding to the 4 × 5 array of characters in the CRT is an array of keys on the left side of the keyboard (see Figure 3 for a correspondence between the screen character positions in the CRT 24 and the associated array of keys on the keyboard). Actuation of a corresponding key on the array of keys causes the character appearing in the corresponding position in the array of displayed characters in the CRT 24 to be placed into the character array 26 of the edit screen of the characters to be printed.

An alternate method is available for identifying the desired character to be printed is provided along with the characters contained in a particular radical-stroke designation and displayed in the CRT 24. Beneath each displayed character can be shown the radical/stroke/character number corresponding to that particular character. Therefore, by keying in the character number code word along with the previously inputted radical and stroke code words for the desired character to be printed, enables the microcomputer 18 to retrieve the desired character from mass storage 12.

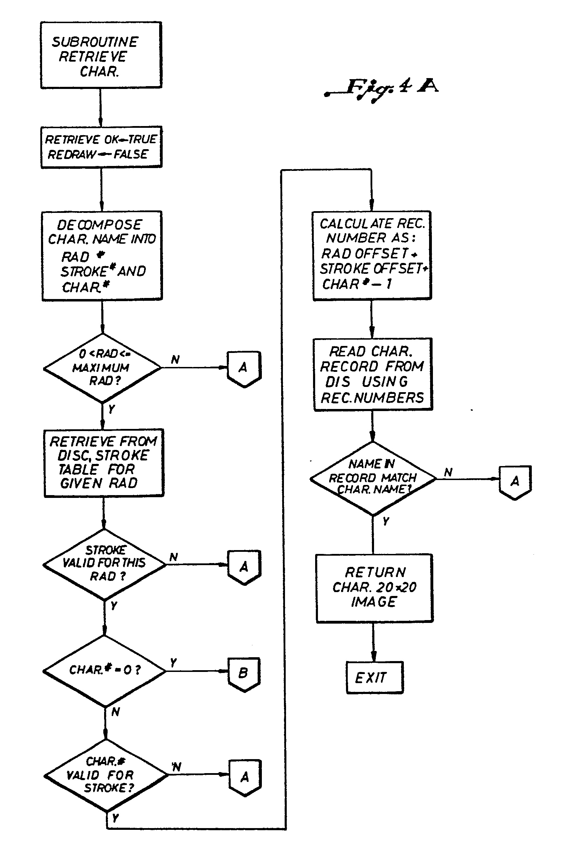

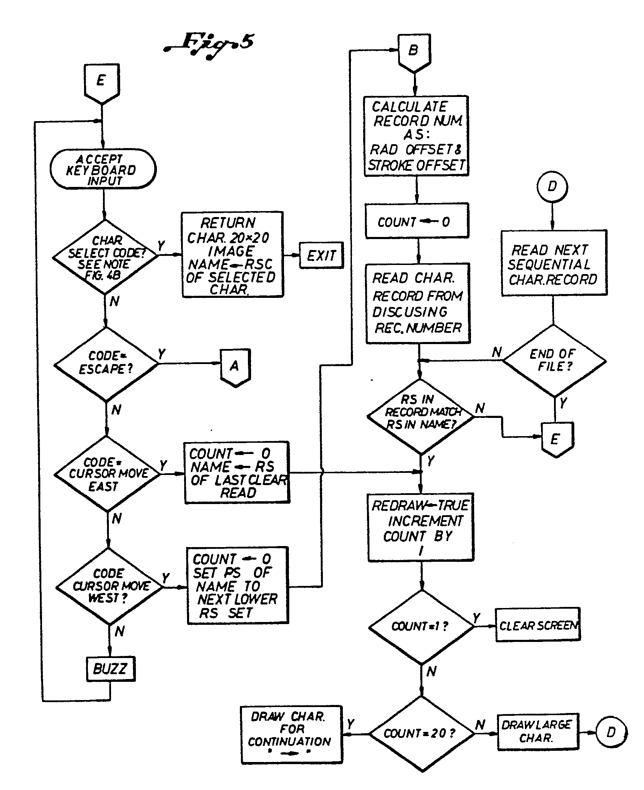

Referring now to Figures 3(a) and (b), 4, and 5, a computer flow diagram for a portion of the programming of microcomputer according to the present invention is shown. Programming of the Apple II Plus microprocessor is in the Apple "Pascal" language. The computer flow diagram of Figures 3(a) and (b) represents the decisional steps in the command routine "INSERT" which will control the placing of the next character to be printed into the array of characters 26 in the display means 24. The functional block shown in Figure 3(a) as "GET CHAR NAME" is the place in the program for the operator to type the radical, stroke count and character input into the microcomputer 18. When the operator has inputted the required code information according to either of the above described embodiments, the program will eventually enter the subroutine "RETRIEVE CHAR". The function of this subroutine is to retrieve from the mass storage device 12 the encoded character according to the inputted radical, stroke and character number code words. Figures 4 and 5 illustrate the computer flow diagram for the subroutine "RETRIEVE CHAR".

A detailed description of the step-by-step operations of the computer program routines illustrated in Figures 3(a) and (b), 4, and 5 is not being presented since a person of ordinary skill in computer programming, having the benefit of the disclosure of the flow diagrams and the above descriptions, could produce the necessary coding of the program routines. In general, however, Figure 3(a) illustrates the process for retrieving a character according to the first embodiment of the invention described above, while Figure 3(b) illustrates the retrieval process according to the alternate embodiment.

In summary, the Chinese typewriter 1 according to the present invention operates from keyboard code word entries representing the radical of a desired character to be printed, the number of calligraphy strokes in addition to the radical required to draw the character and a character number corresponding to the position of the character in a dictionary table of characters having the radical-stroke designation. From the inputted radical, stroke and character number code words, the microcomputer 18 retrieves from the mass storage device 12 the desired character encoded in a dot matrix format and displays in a CRT display means 24 the selected character to be printed. As each character is identified, it is placed into a displayed character position in an array of characters 26 on the CRT 24. When the desired text has been created, as displayed in CRT 24, the text is transmitted for printing as hard copy, as for example, on dot matrix printer 10 or via a modem 20 to a remote output device, such as a line printer or other CRT displays.

To increase speed of entry of the required codes to identify a chosen character, the more frequently occurring characters in Chinese text have been assigned particular keys on the keyboard 28. Striking a character key causes the microcomputer 18 to generate the necessary radical, stroke and character number for that character without further input requirement from the operator. Additionally, those radicals having the largest number of characters derived therefrom are also assigned to a particular key on the keyboard 28. By striking one of those keys, the radical code is automatically generated by the microcomputer 18 so that the operator now only has to input the stroke and character number to complete the unique identification of the desired character to be printed.

When the complete character is not known, but the radical and stroke number is, microcomputer 18 displays for the operator each encoded character having the radical-stroke designation. These characters are displayed in an array of character positions and at operator's option can show the radical/stroke/character number. If the desired character is displayed in CRT 24, the operator may select the character by actuating a key on keyboard 28 corresponding to the character position in the CRT 24 of the desired character, or the operator may input the correct character number for the character to complete the radical/stroke/character number input.

Where the order of the characters having the same R/S index are specified by the frequency of use of the character, rather than its common position in a standard Chinese Dictionary, the operator may depress the "Right Arrow" key as the third code in the R/S/C entry. The most frequently occurring character of the R/S characters is displayed in the text. If this is the character desired, depressing the "Space Bar" key selects the character and begins the next selection process. If the displayed character is not the desired character, depressing the "Right Arrow" key causes the next lower character in the R/S list to be displayed. This process may continue until the desired character is being displayed.

With these methods, the present invention is able to obtain a high-speed character encoding methodology with a minimum of keyboard entry strokes from a simple keyboard entry means to uniquely identify and generate the Chinese characters to be printed.

In describing the invention, reference has been made to a preferred embodiment. However, those skilled in the art and familiar with the disclosure of the invention may recognize additions, deletions, substitutions or other modifications which would fall within the purview of the invention as defined in the appended claims. For example, it would be possible to modify the keyboard arrangement as shown in Figure 2 to increase the number of keyboard levels through the use of the ESCAPE key or by splitting the space bar into two different space bars to increase the number of key entries. Other keyboard key assignments could also be developed. Additionally, rather than storing each encoded character in a dot matrix format, other techniques for storing information adequate to enable a commonly available printing device to create a Chinese ideograph could be used.

**Claims**

1. In a microprocessor controlled typewriting system for printing ideogram characters formed from a radical and a number of additional calligraphy strokes, said system including,
   (A) a keyboard entry (28),
   (B) a microprocessor (18),
   (C) a CRT (24) for displaying an identified ideogram character, and
   (D) a printer (10) for printing the identified characters,
a method of identifying from among a plurality of encoded characters a character to be printed, by generating, in response to the operation of one or more keys on the keyboard entry (28),
   (a) a code word representative of the radical number of the character to be printed;
   (b) a code word representative of the number of additional calligraphy strokes in the character to be printed; and

(c) a code word representative of the character to be printed according to the character's position in a table of all the encoded characters having the same radical and stroke number code words by

i) causing the microprocessor (18) to display in CRT display (24) an array of all the characters (26) encoded for the characters having the radical and stroke code words generated for the character to be printed by operation of the keyboard (28); and

ii) selecting from among the displayed characters the character to be printed by pressing a corresponding key in an array of keys of said keyboard (28), the array of keys equal to the array of displayed characters, said microprocessor (18) generating the character code word for the identified character in response to the struck key;
the microprocessor (18) providing the character to be printed to the printer (10) from among the plurality of encoded characters according to the radical, stroke and character code words generated in steps (a), (b) and (c).

2. An interactive microprocessor controlled typewriting system for printing ideogram characters formed from a radical and a number of additional calligraphy strokes, which comprises:

(a) a microprocessor (18) programmed to select in response to input from an operator a character to be printed from among a plurality of stored characters,

(b) a mass storage device (12) responsive to said microprocessor for storing encoded ideogram characters, each stored character identified according to its radical, the number of calligraphy strokes required in addition to the radical to construct the character and a character number corresponding to the position of the character in a table of all of the characters having the same radical and number of additional strokes;

(c) a keyboard entry means (28) responsive to an operator, said keyboard entry means (28) having a plurality of keys for generating code words to said microprocessor for the radical, stroke and character number of a character to be printed, ones of said keys identifying certain radicals and certain ones of said keys identifying characters which most frequently occur in ideographic text, said microprocessor automatically generating the correct code words for said radicals or characters when their respective keys in said keyboard means are struck;

(d) a display means (24) responsive to the microprocessor (18) for displaying to the operator the characters identified for printing; and

(e) a printer (10) responsive to the microprocessor (18) for printing the characters displayed by said display means;
wherein said microprocessor (18) is responsive to an operator request to display in said display means (24) an array of characters (26) all having the radical and stroke code words generated for the character to be printed and having predetermined character positions, said keyboard entry means (28) having a corresponding array of keys in which each character position in said displayed character array has a corresponding key in the array of keys whereby the striking of a key in the array of keys selects as the character to be printed the character displayed in the character position corresponding to the struck key.

3. A typewriting system according to Claim 2 in which the characters to be printed are displayed by the display means (24) in a first array of character positions, the second array of characters (26) all having the radical and stroke code words for the character to be printed and in which actuation of a key in the array of keys selects as a character to be printed the displayed character in the corresponding character position in the second array.

**Patentansprüche**

1. In einer mikroprozessorgesteuerten Maschinenschreibanlage zum Drucken von aus einem Radikal und einer Anzahl zusätzlicher Kalligraphiestriche bestehenden Ideogrammzeichen, wobei dieses System

(A) eine Tastatureingabe (28),

(B) einen Mikroprozessor (18),

(C) einen Bildschirm (24) zum Darstellen eines erkannten Ideogrammzeichens und

(D) einen Drucker (10) zum Drucken der erkannten Zeichen umfasst,
ein Verfahren zum Erkennen eines zu druckenden Zeichens aus einer Mehrzahl kodierter Zeichen durch Erzeugen, als Reaktion auf die Betätigung einer oder mehrerer Tasten an der Tastatureingabe (28),

(a) eines die Radikalzahl des zu druckenden Zeichens darstellenden Kodeworts;

(b) eines die Anzahl zusätzlicher Kalligraphiestriche im zu druckenden Zeichen darstellenden Kodeworts;

(c) eines das zu druckende Zeichen entsprechend der Stellung des Zeichens in einer Tabelle aller kodierten Zeichen mit denselben Radikal- und Strichanzahl-Kodeworten darstellenden Kodeworts, in dem

i) der Mikroprozessor (18) zum Anzeigen eines Feldes aller derjenigen Zeichen (26) in der Bildschirmanzeige (24) veranlasst wird, die für die Zeichen, deren Radikal- und Strichkodeworte unter Betätigung der Tastatur (28) für das zu drukkende Zeichen erzeugt wurden, kodiert werden;

ii) das zu druckende Zeichen durch Drücken einer entsprechenden Taste in einem Tastenfeld der besagten Tastatur (28) aus den angezeigten Zeichen ausgewählt wird, wobei das Tastenfeld dem Feld der angezeigten Zeichen gleich ist, wobei der besagte Mikroprozessor (18) das Zeichenkodewort für das erkannte Zeichen als Reaktion auf die gedrückte Taste erzeugt;
wobei der Mikroprozessor (18) das zu druckende Zeichen aus der Mehrzahl kodierter Zeichen entsprechend den in Schritten (a), (b) und (c) erzeugten Radikal-, Strich und Zeichen-Codeworte dem Drucker (10) zuführt.

2. Mikroprozessorgesteuerte dialogfähige Maschinenschreibanlage zum Drucken von aus einem Radikal und einer Anzahl zusätzlicher Kalligraphiestriche gebildeten Ideogrammzeichen mit:

(a) einem zum Auswählen eines zu druckenden Zeichens aus einer Mehrzahl gespeicherter Zeichen als Reaktion auf eine Eingabe von einem Bediener programmierten Mikroprozessor (18),

(b) einer zum Speichern kodierter Ideogrammzeichen auf besagten Mikroprozessor ansprechenden Grosspeichervorrichtung (12), wobei jedes gespeicherte Zeichen nach seinem Radikal, der zusätzlich zum Radikal zum Aufbauen des Zeichens erforderlichen Anzahl Kalligraphiestriche und einer der Stellung des Zeichens in der Tabelle aller Zeichen mit demselben Radikal und derselben Anzahl zusätzlicher Striche entsprechenden Zeichenzahl erkannt wird;

(c) einem auf einen Bediener ansprechenden Tastatureingabemittel (28), wobei das besagte Tastatureingabemittel (28) eine Mehrzahl Tasten zum Erzeugen von Kodeworten zum besagten Mikroprozessor für die Radikal, Strich- und Zeichenzahl eines zu druckenden Zeichens, wobei einige der besagten Tasten bestimmte Radikale identifizieren und gewisse der besagten Tasten Zeichen identifizieren, die am häufigsten im ideographischen Text vorkommen, wobei der besagte Mikroprozessor automatisch die richtigen Kodeworte für die besagten Radikale oder Zeichen erzeugt, wenn ihre entsprechenden Tasten im besagten Tastaturmittelgedrückt werden;

(d) einem auf den Mikroprozessor (18) ansprechenden Anzeigemittel (24) zum Darstellen der für den Druck identifizierten Zeichen für den Bediener;

(e) einem auf den Mikroprozessor (18) ansprechenden Drucker (10) zum Drucken der durch das besagte Anzeigemittel dargestellten Zeichen; dadurch gekennzeichnet, dass der besagte Mikroprozessor (18) auf eine Bedieneranforderung zum Darstellen eines Feldes von Zeichen (26) am besagten Anzeigemittel (24) anspricht, wobei für alle Zeichen die Radikal- und Strichkodeworte für das zu druckende Zeichen erzeugt werden und alle vorbestimmte Zeichenstellungen besitzen, das besagte Tastatureingabenmittel (28) ein entsprechendes Tastenfeld besitzt, bei dem für jede Zeichenstellung im besagten dargestellten Zeichenfeld eine entsprechende Taste am Tastenfeld besteht, wodurch mit dem Drücken einer Taste im Tastenfeld das an der gedrückten Taste entsprechenden Zeichenstellung dargestellte Zeichen als das zu druckende Zeichen ausgewählt wird.

3. Maschinenschreibanlage nach Anspruch 2, dadurch gekennzeichnet, dass die zu druckenden Zeichen durch das Anzeigemittel (24) in einem ersten Feld von Zeichenstellungen dargestellt werden, wobei das zweite Zeichenfeld (26) alle Radikal- und Strichkodeworte für das zu druckende Zeichen enthält, und dass mit Betätigung einer Taste im Tastenfeld dass dargestellte Zeichen in der entsprechenden Zeichenstellung im zweiten Feld als zu druckkendes Zeichen ausgewählt wird.

## Revendications

1. Dans un système de dactylographie commandé par microprosseur pour imprimer des caractères idéographiques formés d'un radical et de plusieurs traits calligraphiques supplémentaires, ledit système comprenant,

(A) un dispositif d'introduction à clavier (28),

(B) un microprocesseur (18),

(C) un tube à rayons cathodiques (24) pour afficher un caractère idéographique identifié, et

(D) une imprimante (10) pour imprimer les caractères identifiés,

un procédé pour identifier parmi plusieurs caractères codés, un caractère à imprimer, en créant, en réaction à l'actionnement d'une ou de plusieurs touches du dispositif d'introduction à clavier (28),

(a) un mot de code représentatif du numéro de radical du caractère à imprimer,

(b) un mot de code représentatif du nombre de traits calligraphiques supplémentaires du caractère à imprimer, et

(c) un mot de code représentatif du caractère à imprimer d'après la position du caractère dans une table de tous les caractères codés comportant les mêmes mots de code de radical et de nombre de traits, en

1) forçant le microprocesseur (18) à afficher, dans le dispositif d'affichage à tube à rayons cathodiques (24), une série de tous les caractères (26) codés pour les caractères présentant les mots de code de radical et de traits créés pour le caractère à imprimer à l'aide du clavier (28), et

ii) sélectionnant parmi les caractères affichés celui qui doit être imprimé en appuyant sur une touche correspondante dans une série de touches dudit clavier (28), la série de touches étant égale à la série de caractères affichés, le microprocesseur (18) créant le mot de code de caractère pour le caractère identifié en réponse à la touche enfoncée,

le microprocesseur (18) fournissant le caractère à imprimer à l'imprimerie (10) parmi les nombreux caractères codés en fonction des mots de code de radicaux, de traits et de caractères produits dans les phases (a), (b) et (c).

2. Système interactif de dactylographie commandé par microprocesseur pour imprimer des caractères idéographiques formés d'un radical et de plusieurs traits calligraphiques supplémentaires, qui comprend:

(a) un microprocesseur (18) programmé pour sélectionner, en réponse à une introduction par un opérateur, un caractère à imprimer parmi un grand nombre de caractères mémorisés,

(b) un dispositif de mémorisation en masse (12) réagissant audit microprocesseur pour mémoriser des caractères idéographiques codés, chaque caractère mémorisé étant identifié d'après son radical, le nombre de traits calligraphiques requis en plus du radical pour construire le caractère et un numéro de caractère correspondant à la position du caractère dans une table de tous les caractères comportant le même radical et le même nombre de traits supplémentaires,

(c) un dispositif d'introduction au clavier (28) réagissant à un opérateur, ledit dispositif d'introduction au clavier (28) comportant plusieurs touches destinées à créer des mots de code pour ledit microprocesseur se rapportant au numéro du radical, au nombre de traits et au numéro de caractère d'un caractère à imprimer, certaines desdites touches identifiant certains radicaux et certaines desdites touches identifiant des caractères qui se présentent plus fréquemment dans un texte idéographique, le microprocesseur créant automatiquement les mots de code corrects pour les radicaux ou les caractères lorsque leurs touches respectives dans ledit dispositif à clavier sont enfoncées,

(d) un dispositif d'affichage (24) réagissant au microprocesseur (18) pour afficher, pour l'opérateur, les caractères identifiés pour l'impression, et

(e) une imprimante (10) réagissant au microprocesseur (18) pour imprimer les caractères affichés par ledit dispositif d'affichage, dans lequel ledit microprocesseur (18) réagit à la demande d'un opérateur pour afficher, dans ledit dispositif d'affichage (24), une série de caractères (26) qui possèdent tous les mots de code de radical et de traits créés pour le caractère à imprimer et qui présentent des positions de caractères déterminées, ledit dispositif d'introduction au clavier (28) comportant une série correspondante de touches dans laquelle chaque position de caractère dans la série de caractères affichés comporte une touche correspondante dans la série de touches, le fait d'enfoncer une touche de la série sélectionnant, en tant que caractère à imprimer, le caractère affiché dans la position de caractère correspondant à la touche enfoncée.

3. Système de dactylographie selon la revendication 2, dans lequel les caractères à imprimer sont affichés par le dispositif d'affichage (24) dans une première série de positions de caractères, les caractères (26) de la seconde série comportant tous les mots de code de radical et de traits pour le caractère à imprimer et dans lequel l'actionnement d'une touche dans la série de touches sélectionne, en tant que caracatère à imprimer, le caractère affiché dans la position de caractère correspondante de la seconde série.

## Fig.1

MASS STORAGE

HARD DISC

FLOPPY DISC

14

16

18

MICRO COMPUTER
( CPU )

20

PRINTER
DOT
MATRIX

MODEM

10

26

24

CRT
(CATHODE
RAY TUBE)

COMMUNI-
CATIONS
NETWORK

HARD COPY

28

22

REMOTE OUTPUT
DEVICE
(PRINTER, CTR )

OPERATOR

## Fig.2

| | | | | | | | | | | | | | RESET |

| ESC | | | | | | | | | | | | REPT | RETURN |

| CNTRL | | | | | | | | | | | ← | → |

| SHIFT | | | | | | | | | | | SHIFT |

SPACE BAR

1

**Fig. 3A**

**Fig. 4B**

-NOTE-
ON SELECTING DESIRED
CHARACTER FROM THOSE
DISPLAYED:

SCREEN POSITION

ASSOCIATED KEY
ON KEYBOARD

2

Fig. 3B

_Fig. 4 A_

SUBROUTINE
RETRIEVE
CHAR.

↓

RETRIEVE OK←TRUE
REDRAW←FALSE

↓

DECOMPOSE
CHAR. NAME INTO
RAD #
STROKE # AND
CHAR #

↓

0 <RAD<=
MAXIMUM
RAD? — N → A

↓ Y

RETRIEVE FROM
DISC, STROKE
TABLE FOR
GIVEN RAD

↓

STROKE
VALID FOR THIS
RAD ? — N → A

↓ Y

CHAR.# = 0 ? — Y → B

↓ N

CHAR.#
VALID FOR
STROKE? — N → A

↓ Y

CALCULATE REC.
NUMBER AS:
RAD OFFSET +
STROKE OFFSET +
CHAR # — 1

↓

READ CHAR.
RECORD FROM
DIS USING
REC. NUMBERS

↓

NAME IN
RECORD MATCH
CHAR. NAME? — N → A

↓ Y

RETURN
CHAR. 20×20
IMAGE

↓

EXIT

4

**Fig. 5**